# EUROPÄISCHE PATENTSCHRIFT

(11) **EP 1 693 247 B1**
(45) Veröffentlichungstag und Bekanntmachung des Hinweises auf die Patenterteilung: **31.03.2010**
(21) Anmeldenummer: 06002774.5
(22) Anmeldetag: 10.02.2006
(51) Int. Cl.: B60N 2/28

(54) **Auto-Kindersitz**
Child car seat
Siège auto pour enfant

(30) Priorität: 16.02.2005 DE 102005007262
(43) Veröffentlichungstag der Anmeldung: 23.08.2006
(73) Patentinhaber: Recaro GmbH & Co. KG, 73230 Kirchheim/Teck (DE)
(72) Erfinder: Kespohl, Horst-Günther, 73101 Aichelberg (DE)
(74) Vertreter: Küchler, Stefan

(56) Entgegenhaltungen:
- EP-A- 0 431 199
- EP-A- 1 391 345
- WO-A-2005/000627
- DE-A1- 2 221 489
- US-A1- 2004 095 005
- US-B1- 6 773 065

## Beschreibung

Die Erfindung richtet sich auf einen Auto-Kindersitz, bestehend einerseits aus einer Sitzschale, umfassend einen unteren Sitzbereich mit einer unterseitigen Aufstandsfläche zum Aufstellen auf einem Sitz eines Fahrzeugs, einen gegenüber dem Sitzbereich empor ragenden Lehnenbereich mit einer Außenfläche zum Anlehnen an die Rückenlehne des Fahrzeugsitzes, sowie den seitlichen Bewegungsspielraum eines Kindes begrenzende Seitenflächen, bspw. seitliche Armlehnen, Schulter- und/oder Kopfstützen, wobei zumindest der die rückwärtige Anlehnfläche aufweisende Teil des Lehnenbereichs mit dem die unterseitige Aufstandsfläche aufweisenden Sitzbereich starr verbunden ist, und andererseits aus einem flächigen Sitzelement, umfassend eine Sitzfläche und/oder Rückenlehne, welche an der dem Kind zugewandten Innenseite der Sitzschale angeordnet und dieser gegenüber hinsichtlich ihrer Neigung und/oder Position verstellbar ist/sind. Dabei kann die unterseitige Aufstandsfläche auch zweiteilig oder mehrteilig ausgebildet sein, bspw. mittels zweier seitlicher Kufen. Ähnliches könnte auch für die rückwärtige Anlehnfläche gelten.

Gerade bei langen Fahrten ist eine Neigungsverstellung eines Kindersitzes besonders wichtig, weil manche Kinder in der relativ aufrechten Sitzposition kaum schlafen können und daher eine stärker geneigte Liegeposition wünschen. Es sind schon verschiedene Versuche unternommen worden, um eine solche Verstellmöglichkeit von einer relativ aufrechten Sitzposition in eine stärker geneigte Liegeposition zu realisieren.

Im Dokument DE-A-10 2004 005 624 der Anmelderin wird ein Auto-Kindersitz beschrieben, der zwecks Verstellung von einer aufrechten Sitzposition in eine geneigte Liegeposition insgesamt gegenüber dem betreffenden, fahrzeugeigenen Sitz bewegt wird. Indem bspw. an der Sitzunterseite im Bereich der Vorderkante eine Platte herabgeschwenkt wird, erfährt der Kindersitz eine Neigungsverstellung, wobei er sich in seinem unteren Bereich insgesamt nach vorne verlagert. Dies bringt eine zusätzliche Spannung der fahrzeugeigenen Gurte, welche zur Fixierung des Kindersitzes auf dem fahrzeugeigenen Gurt verwendet werden, mit sich. Letzteres wiederum kann nur dadurch aufgefangen werden, dass Oberflächenbereiche der Gurtführungsschlitze an dem Kindersitz elastisch ausgebildet sind und so eine Relativbewegung des Kindersitzes gegenüber dem fahrzeugeigenen Gurt zulassen. Dadurch ergibt sich jedoch insgesamt ein nicht unerheblicher, konstruktiver Aufwand, der bei der Preisbemessung für den vorbekannten Sitz negativ ins Gewicht fällt.

Ein gattungsgemäßer Kindersitz ist aus den Dokumenten US-A-2004/0095005 und EP-A-1391345 bekannt.

In der deutschen Offenlegungsschrift 31 37 923 A1 wird ein Kindersitz beschrieben mit einer starren Sitzschale; ein keilförmiges Kissen sowie ein Polster können in unterschiedlichen Positionen in den Sitz eingelegt werden, so dass sich dessen Innenkontur ändert. In einer eher aufrechten Sitzposition sitzt das Kind auf dem keilförmigen Kissen, in einer stärker geneigten Liegeposition werden die Beine des Kindes auf das sodann nach vorne verlagerte Keilkissen gelegt. Eine solche Anordnung hat eine Vielzahl von Nachteilen: Einerseits sind die beweglichen Elemente - Keilkissen und Polster - an der Sitzschale kaum oder gar nicht fixiert, so dass ein lebhaftes Kind diese Elemente von selbst in die unterschiedlichsten Positionen bringen kann, woraus dann eine unangenehme Sitzgeometrie resultiert. Fast noch schwerer wiegt jedoch der Umstand, dass das Kind zur Verstellung des Kindersitzes zunächst aus dem Sitz gehoben werden muß, damit sodann ein Zugang zu Keilkissen und Polster geschaffen ist und diese Elemente gedreht bzw. verschoben werden können. Also ist eine Verstellung während der Fahrt nicht möglich; vielmehr muß zunächst eine Raststätte oder zumindest ein Parkplatz aufgesucht werden, was sich auf Autobahnen als nicht unkompliziert gestalten kann.

Aus diesen Nachteilen des beschriebenen Standes der Technik resultiert das die Erfindung initüerende Problem, einen gattungsgemäßen Auto-Kindersitz derart weiterzubilden, dass unter minimalem konstruktiven Aufwand eine Verstellung der Sitzneigung möglich ist, ohne dazu das Kind aus dem Sitz heben zu müssen.

Zur Lösung dieses Problems sieht die Erfindung bei einem gattungsgemäßen Auto-Kindersitz eine manuell betätigbare Einrichtung an dem Sitz mit einer Ankopplung an ein bewegliches Sitzteil einerseits und an die Sitzschale andererseits, zur Verstellung der Neigung und/oder Position des flächigen Sitzelementes und zur Arretierung oder Feststellung desselben bei mehreren, unterschiedlichen Neigungen und/oder Positionen vor, womit gleichzeitig eine Relativbewegung zwischen der Sitzfläche und der Rückenlehne des flächigen Sitzelementes möglich ist.

Dadurch ist die Möglichkeit einer Relativbewegung zwischen Sitzschale einerseits und Sitzfläche bzw. -lehne andererseits geschaffen, welche eine Neigungsverstellung von Sitzfläche und/oder -lehne erlaubt, ohne dass sich dabei die Position der Sitzschale gegenüber dem fahrzeugeigenen Sitz ändert. Aus diesem Grund eignet sich ein solcher Kindersitz für jede Art der Befestigung auf einem fahrzeugeigenen Sitz - sowohl unter Verwendung eines fahrzeugeigenen Gurtes als auch mittels sog. ISOFIX-Laschen, welche an dafür vorgesehenen Verankerungspunkten im Bereich des Fahrzeugsitzes eingerastet werden können. Letzteres ist vor allem deshalb interessant, weil es bei Anordnung von insgesamt vier Aufnahme-Laschen - je zwei an der Sitzvorderseite und zwei an der Sitzrückseite - möglich ist, den Kindersitz wahlweise in Fahrtrichtung als auch entgegen der Fahrtrichtung an den fahrzeugeigenen ISOFIX-Verankerungen zu montieren, wie dies bspw. in Schweden für Kinder bis zu einem Körpergewicht von 18 kg vorgeschrieben ist. Indem die Sitzschale einen Sitzflächenbereich, einen Rückenlehnenbereich sowie seitliche Begrenzungen, bspw. Armlehnen und/oder seitliche Kopfstützen aufweist, entspricht die Sitzschale rein äußerlich dem üblichen Aufbau eines Kindersitzes, wobei der Sitzflächen- und der Rückenlehnenbereich vor allem der Abstützung des Sitzes auf einem fahrzeugeigenen Sitz dient sowie zur Bereitstellung von Verankerungs- bzw. Lagerungs- oder Führungspunkten für die beweglichen Sitzteile. Andererseits ist es nicht erforderlich, Armlehnen und/oder seitliche Kopfstützen bei einer Neigungsverstellung mitzuführen, so dass letztere zur Erhöhung der Stabilität mit dem Korpus der Sitzschale verbunden sind. Da die äußere Sitzschale in sich starr ausgebildet ist, erhält der gesamte Kindersitz die nötige Steifigkeit, um auch trotz ggf. erhöhter Beschleunigungs- oder Verzögerungs- oder Seitenkräfte die beweglichen Sitzteile und insbesondere auch ein in dem Sitz befindliches Kind sicher an Ort und Stelle zurückzuhalten. Zur Neigungsverstellung ist an dem Sitz eine manuell betätigbare Verstelleinrichtung vorgesehen. Deren Aufgabe besteht darin, durch Ankopplung an ein bewegliches Sitzteil einerseits und an die Sitzschale andererseits Einfluß auf die Relativstellung zwischen beiden auszuüben; andererseits sollte die Verstelleinrichtung in der Lage sein, eine einmal eingestellte Relativposition arretieren zu können, vorzugsweise derart, dass selbst bei starken Beschleunigungs- oder Verzögerungskräften keinerlei selbsttätige Verstellung eintreten kann. Dies kann bspw. durch einen Rastmechanismus erreicht werden, der an bestimmten Relativpositionen eine formschlüssige Verbindung herstellt, die ohne Lösen des betreffenden Rastelements nicht überwunden werden kann. Zu denken wäre aber auch an eine klemmende und/oder selbsthemmende Mechanik, die in beliebigen Zwischenpositionen des beweglichen Sitzelements betätigt werden kann. Mit einer solchen Verstelleinrichtung werden die auszuführenden Handhabungen so weit reduziert, dass eine Verstellung auch während der Fahrt möglich ist.

Bevorzugt sind an der Sitzschale Einrichtungen zur Fixierung des erfindungsgemäßen Kindersitzes auf einem fahrzeugeigenen Sitz vorgesehen. Es kann sich hierbei einerseits um Führungseinrichtungen, bspw. Schlitze, Klemm- und oder Spanneinrichtungen für einen fahrzeugeigenen Gurt handeln, und/oder um bügel- oder laschenartige ISOFIX-Befestigungsmittel, die bei speziell mit einem solchen System ausgestatteten Fahrzeugen an dafür vorgesehenen Verankerungspunkten an einem Sitz oder an der Karosserie des Fahrzeugs eingehängt bzw. eingerastet werden können.

Zwecks Verankerung an einem fahrzeugeigenen Gurt kann der Rückenlehnenabschnitt der äußeren Sitzschale in einen vorderen und einen hinteren Teil untergliedert sein, die gegeneinander beweglich sind, bspw. um ein gemeinsames Gelenk im Beckenbereich verschwenkbar, und zwar um eine quer zur Sitz- bzw. Fahrtrichtung verlaufende Drehachse. Während der hintere Teil in Kontakt mit der Rückenlehne des Fahrzeugsitzes verbleibt, kann der vordere Teil demgegenüber nach vorne geschwenkt werden. Sodann gibt sich zwischen diesen beiden Teilen ein etwa keilförmiger Spalt, durch den ein fahrzeugeigener Dreipunktgurt gefädelt werden kann. Ist dieser Dreipunktgurt straff gespannt, wird der vordere Teil der Rückenlehne der Sitzschale wieder nach hinten geschwenkt und rastet dort bspw. mittels je einer Rastnase links und rechts ein, wobei der Dreipunktgurt festgklemmt wird. Wenn die seitlichen Kopf-, Schulter- und/oder Bruststützen an dem nach vorne schwenkbaren Teil der Rückenlehne der äußeren Sitzschale befestigt sind, müssen sie die Schwenkbewegung nachvollziehen. Damit ihre Bewegung solchenfalls nicht durch die seitlichen Armlehnen beeinträchtigt wird, reichen sie nicht bis zu den Armlehnen herab. Der dadurch geschaffene Spalt läßt ihnen genügend Spielraum zum Verschwenken. Wenn andererseits das verstellbare Rückenlehnenteil an dem vorschwenkbaren Teil der Rückenlehne der äußeren Sitzschale gelagert ist, muß dieses verstellbare Sitzflächenteil ebenfalls mit nach vorne schwenken. Um dies zu ermöglichen, empfiehlt die Erfindung, dass die quer zur Sitz- bzw. Fahrtrichtung verlaufende Schwenkachse zwischen den beiden Rückenlehnenteilen der Sitzschale sich etwa in einer gemeinsamen Flucht mit einer Bewegungsachse eines Gelenk- oder Scharnierbereichs zwischen einem Rückenlehnenabschnitt und einem Sitzflächenabschnitt des insgesamt verstellbaren Sitzelements befindet.

Gemäß einer Weiterbildung der Erfindung ist die Verstelleinrichtung für wenigstens ein flächiges Sitzelement gegenüber der Sitzschale derart ausgebildet, dass bei einer Relativverstellung zwischen Sitzelement und Sitzschale letzteres keine Relativbewegung gegenüber dem fahrzeugeigenen Sitz ausführt. Dies wird insbesondere dadurch erreicht, dass die verstellbaren Sitzteile weder an der Sitzunterseite noch an der Sitzrückseite, d.h., der Sitzlehne, gegenüber der Sitzschale nach unten oder hinten überstehen. Vorzugsweise wird der erfindungsgemäße Kindersitz überdies an den Seiten durch die an der Schale festgelegten Arm- und Kopfstützen abgeschlossen, so dass sich der durch die Lagerungs- und/oder Führungselemente den beweglichen Sitzteilen eingeräumte Bewegungsspielraum allenfalls auf die einem fahrzeugeigenen Sitz abgewandte Ober- und Vorderseite beschränkt, d.h., nach Art einer Verlagerung nach oben und/oder vorne.

Im Rahmen einer ersten Ausführungsform der Erfindung kann vorgesehen sein, dass ein Sitzelement gegenüber der Sitzschale verschwenkbar ist. Für die Anwendung dieses Prinzips eignet sich insbesondere die Rückenlehne, deren Neigung maßgeblichen Einfluß auf die Sitz- oder Liegeposition eines Kindes hat, während die Sitzfläche sich demgegenüber hinsichtlich ihrer räumlichen Orientierung nicht wesentlich verändern muß. Dabei ist etwa an die Verstellbarkeit eines Ruhesessels für Erwachsene zu denken, wo durch Herabschwenken der Rückenlehne ebenfalls eine Sitzverstellung erreicht wird. Im Gegensatz zu einem derartigen Ruhesessel liegt jedoch bei dem erfindungsgemäßen Kindersitz die Schwenkachse für die Rückenlehne bevorzugt nicht im Bereich des Beckens, sondern stattdessen im Bereich des Kopfs eines in dem Sitz befindlichen Kindes.

Eine andere Verstellmöglichkeit besteht darin, dass ein Sitzelement gegenüber der Sitzschale verschiebbar ist. Damit ist vor allem, aber nicht ausschließlich, eine Verschiebung etwa parallel zu der Grundfläche des betreffenden Sitzelements gemeint. Diese Verstellmöglichkeit bewährt sich vor allem bei dem Sitzflächenelement, weil dadurch eine Neigungsverstellung der Rückenlehne - mit einer Vorverlagerung des Lendenwirbelbereichs - ermöglicht wird.

Indem ein flächiges Sitzelement an der Sitzschale im Bereich von deren Rückenlehnen-Oberkante gelagert und/oder geführt ist, ergibt sich ein Verankerungspunkt, wo die auf ein bewegliches Sitzelement einwirkenden Kräfte an die Sitzschale abgeleitet werden können. Gleichzeitig wird der Bewegungsspielraum der Rückenlehne an dieser Stelle auf eine (vorzugsweise etwa vertikale) Verschiebebewegung und/oder auf eine Schwenkbewegung um eine (vorzugsweise quer zur Fahrtrichtung verlaufende) Achse eingeschränkt. Vorzugsweise sind die Lagerungen bzw. Führungen an beiden Seiten des Sitzes symmetrisch zueinander, also paarweise, vorhanden.

In ähnlicher Form schafft wenigstens ein (weiterer) Lagerungs- und/oder Führungspunkt für ein flächiges Sitzelement im unteren Sitzbereich, vorzugsweise im vorderen Bereich der Sitzschale, insbesondere bei der Sitzflächen-Vorderkante, eine zusätzliche Verankerung bzw. Beschränkung des Bewegungsspielraums des Sitzflächenelements. Vorzugsweise sind die Lagerungen bzw. Führungen an beiden Seiten des Sitzes symmetrisch zueinander, also paarweise, vorhanden, oder als eine gemeinsame Führung in der Sitzmitte. Besonders bewährt hat es sich, an beiden Seiten der Sitzschaleninnenseite, etwa unterhalb je einer seitlichen Armlehne, je eine Kulisse, also eine Nut mit einem vorgegebenen Verlauf, vorzusehen, in der jeweils ein seitlicher Fortsatz an dem unteren Abschnitt des verstellbaren Sitzelements eingreifen kann. Vorzugsweise hat eine solche Kulisse einen oberen Abschnitt, der etwa in Sitz- bzw. Fahrtrichtung verläuft und es erlaubt, den unteren Abschnitt des Sitzflächenelements nach vorne in die Liegeposition zu ziehen. Wenn im oberen Bereich der Rückenlehne reine Drehlagerungen vorgesehen sind, so hebt sich die Sitzfläche bei ihrer nach vorne gerichteten Verschiebebewegung infolge der dadurch vorgegebenen Kreisbewegung des Rückenlehnenabschnitts im rückwärtigen Beckenbereich an. Die Folge wäre eine Neigung der Sitzflächenvorderkante nach unten; um dies zu vermeiden, kann der etwa in Sitzrichtung verlaufende Längsabschnitt der Kulissen von hinten nach vorne leicht ansteigend verlaufen, bspw. unter einem Winkel von ca. 5° bis 15°, so dass die Orientierung der Sitzfläche im Raum stets etwa konstant, d.h., etwa horizontal, bleibt. Von dem oberen Längsabschnitt jeder Kulisse zweigen mehrere kurze Kulissenabschnitte nach unten ab, in welche die seitlichen Fortsätze der verstellbaren Sitzfläche eingreifen können. Sitzt ein Kind auf dem erfindungsgemäßen Sitz, so drückt sein Körpergewicht die seitlichen Fortsätze fest in die ausgewählten Vertikalabschnitte der Kulissen hinein, so dass sich das Sitzinnenteil nicht von selbst verstellen kann. Eine Verstellung ist nur möglich, wenn die Sitzfläche von einem Erwachsenen angehoben wird, bis die seitlichen Fortsätze sich auf Höhe des oberen Längsabschnittes der Kulissen befinden und in demselben verschoben werden können - entweder in Sitzrichtung oder entgegen derselben, bis zu einem anderen Vertikalabschnitt, wo dann wieder eine Arretierung erfolgen kann. Pro Kulisse können zwei oder mehr Vertikalabschnitte vorgesehen sein.

Indem das verstellbare, flächige Sitzelement sowohl eine Sitzfläche als auch eine Rückenlehne aufweist, ergibt sich ein integrales Bauteil, mit dem Vorteil, dass sich das Sitzflächen- und das Rückenlehnenteil gegenseitig stabilisieren. Daher ist u.U. neben den oben erwähnten, zwei Lagerungs- und/oder Führungspunkten bzw. - punktpaaren keine weitere Verbindung mit der Sitzschale erforderlich.

Erfindungsgemäß ist zwischen dem Sitzflächenbereich und dem Rückenlehnenbereich eines insgesamt verstellbaren, flächigen Sitzelements eine Relativbewegung möglich, so können diese Elemente, während einer Neigungsverstellung unterschiedlichen Bewegungsbahnen folgen, was eine insgesamt platzsparende Konstruktion eines derartigen Kindersitzes erlaubt. Dabei sollten die beiden gegeneinander beweglichen Bereiche - Sitzflächenbereich einerseits und Rückenlehnenbereich andererseits - in sich deutlich steifer sein als in dem weicheren Beckenbereich, so dass das Kind an diesen Teilen genügend Halt findet. Dadurch ist es nicht erforderlich, das flächige Sitzelement großflächig an der Sitzschale abzustützen wie bei der DE 31 37 923 A1, sondern es kann demgegenüber angehoben bzw. nach vorne verlagert sein; letzteres wiederum gewährleistet, dass das flächige Sitzelement während seiner Verstellbewegung nicht durch die Sitzschale behindert wird. Der weiche Beckenbereich kann bspw. durch ein Filmscharnier realisiert sein oder mit einem eigenen Scharnier- oder Gelenkbauteil.

Die Erfindung läßt sich dahingehend weiterbilden, dass ein flächiges Element in sich beweglich ist, bspw. über ein oder mehrere Scharniere oder Filmscharniere.

In Weiterverfolgung dieses Erfindungsgedankens kann ferner vorgesehen sein, dass wenigstens ein flächiges Element Sollbruchstellen aufweist, welche bei Überschreiten von bestimmten Verzögerungswerten zum Schutz des Kindes aufbrechen.

Ein verstellbarer Sitzteil erhält ferner eine gewisse Elastizität, indem er ein flächiges Element aufweist aus einem (begrenzt) biegbaren Material, bspw. aus einem flächigen Kunststoff oder einem Gewebe oder einem Geflecht. Durch eine solche Elastizität kann sich der Sitzteil der Gestalt eines Kindes anpassen und wird von diesem als bequem empfunden. Damit ist eine zusätzliche Verstelleinrichtung zur Anpassung des Sitzes an die Größe eines wachsenden Kindes überflüssig. Außerdem kann damit das Gewicht des Kindersitzes minimiert werden. Schließlich kann es bei lokalen Überbeanspruchungen, bspw. bei einer plötzlichen Verzögerung des Fahrzeugs, nachgeben, so dass die auf das Kind einwirkenden Verzögerungskräfte nicht zu groß werden können.

Wenn ein flächiges Element eine oder mehrere Luftkammern aufweist oder eine sonstige Polsterung, bspw. mit einer Schaumstoffschicht, so entsteht dadurch ebenfalls eine Elastizität, welche dann die Verwendung eines relativ steifen Materials als Substrat erlaubt.

Die Erfindung bietet außerdem die Möglichkeit einer Hinterlüftung im Bereich wenigstens eines flächigen Elements. Damit kann einerseits einer Transpiration des Kindes vorgebeugt werden, indem sich kein Hitzestau bilden kann; andererseits kann dennoch abgesonderter Schweiß schnell abtrocknen, so dass ein flächiges Element trotz evtl. gewebeartiger Beschaffenheit nicht im Lauf einer längeren Reise feucht wird und sich statt dessen stets angenehm trocken anfühlt.

Von nicht unerheblicher Bedeutung für die Stabilität des erfindungsgemäßen Sitzes ist, dass ein verstellbarer Sitzteil durch zumindest bereichsweise umlaufende Rippen oder gar einen Rahmen verstärkt ist. Damit lassen sich flächenhaft auf den beweglichen Sitzteil einwirkende (Gewichts-) Kräfte an bestimmten Linien zusammenfassen und - ggf. über dessen Rand - den Befestigungs-, insbesondere Lagerungs- und/oder Führungspunkten zuleiten, so dass eine lokale Überbeanspruchung eines flächigen Sitzteils ausgeschlossen ist. Solche Versteifungsrippen oder -rahmen sind bevorzugt an der dem Kind abgewandten Unter- oder Rückseite eine flächigen Sitzelements angeordnet.

Versteifungsrippen sind vorzugsweise aus Kunststoff und mit dem betreffenden Sitzelement integriert; ein Rahmen kann bspw. als Rohr ausgebildet sein, denn ein Rohr hat ein optimales Verhältnis zwischen Stabilität einerseits und Gewicht andererseits.

Ein flächiges Element eines verstellbaren Sitzteils läßt sich an einem solchen Rahmen an- oder einhängen, vorzugsweise über elastische oder federnde Elemente, so dass sich insbesondere bei einer rasanten und/oder kurvenreichen Fahrt, aber auch bei plötzlichen Beschleunigungen, bspw. einem auffahrenden Auto, eine Abfederung ergibt ähnlich wie in einem gut gepolsterten Autositz. Eine andere Art der Polsterung besteht in der Verwendung von elastischen Einlagen, bspw. aus Styropor, welche bei einem Aufprall stärker einfedern können als ein durch Rippen ausgesteiftes Sitzelement. Solche elastischen Einsätze können vorzugsweise im Bereich des Kopfs angeordnet sein, und zwar sowohl an dem verstellbaren Rückenlehnenbereich als auch an den seitlichen Kopfstützen, die mit der Sitzschale verbunden sind.

Ein dem Kindersitz eigener Gurt für ein Kind, bspw. ein Hosenträgergurt, sollte an einem verstellbaren Sitzelement geführt und/oder verankert sein, damit bei der Neigungsverstellung des Kindersitzes kein Nachstellen eines solchen Gurtes erforderlich ist. Im Fall einer Verankerung an einem beweglichen Sitzteil bietet sich ein stabiler Rahmen desselben bevorzugt an. Der Gurtverlauf kann andererseits aber auch derart gestaltet sein, dass die Gurtlänge unabhängig von der Neigungseinstellung des Sitzes stets unverändert bleibt. Solchenfalls kann der Gurt an der Sitzschale verankert sein, während im Bereich des verstellbaren Sitzelements nur eine Umlenkung und/oder Führung des Gurtes erfolgt. Zu diesem Zweck können bspw. im Schulter- oder Kopfbereich der verstellbaren Rückenlehne Durchbrechungen vorgesehen sein, durch die je ein Gurtabschnitt geführt werden kann. Es kann sich hierbei um etwa vertikal verlaufende Längsschlitze handeln, so dass eine Anpassung an unterschiedlich große Kinder möglich ist. Bevorzugt ist auch ein vorderer Gurtabschnitt vorhanden, der zwischen den Beinen des Kindes hindurchläuft und dadurch mit Sicherheit verhindert, dass ein Kind nach unten aus dem Gurt herausrutschen kann. Ein solcher, vorderer Gurtabschnitt ist vorzugsweise an der Sitzschale verankert, insbesondere an deren Unterseite, und kann zu diesem Zweck eine Ausnehmung in dem verstellbaren Sitzelement durchgreifen. Nach dem erfindungsgemäßen Prinzip läßt sich sogar mit geringem Aufwand ein 5-Punkt-Gurt realisieren, wobei neben den beiden Schultergurten und dem Beingurt noch zwei Beckengurtabschnitte vorgesehen sind, die vorzugsweise seitlich zwischen dem verstellbaren Sitzflächenelement einerseits und einer Armlehne der Sitzschale hindurch laufen und an letzterer links und rechts verankert sind. 5-Punkt-Gurte haben sich gerade bei Kindern in dem Altersbereich zwischen 9 Monaten und 3 ½ Jahren bewährt, weil Kinder in dieser Altersstufe oft versuchen, die Schultergurte abzustreifen.

Ferner entspricht es der Lehre der Erfindung, dass der dem Kindersitz eigene Gurt ein Gurtschloß aufweist, sowie ggf. eine Längenverstellvorrichtung und/oder ein (automatisches) Gurtspannmittel. Bei der Konstruktion derartiger Elemente hat die Sicherheit und Zuverlässigkeit des Gurtes höchste Priorität, während ein möglichst hoher Bedienungskomfort als Nebenbedingung zu beachten ist. Bei einem 5-Punkt-Gurtsystem laufen alle 5 Gurtabschnitte sternförmig an einem solchen Gurtschloß zusammen, das bevorzugt fest mit dem vorderen, mittig verlaufenden Gurtabschnitt verbunden ist, während die anderen 4 Gurtabschnitte je eine Schloßzunge zum Einstecken in das Gurtschloß aufweisen.

Schließlich ist im Rahmen einer bevorzugten Realisierung ein manuelles Betätigungselement der Verstelleinrichtung an der Außenseite der Sitzschale angeordnet, bspw. vorne oder seitlich, und bspw. als Griff, Hebel oder Handrad ausgebildet. Letzteres erlaubt eine stufenlose Verstellung, ggf. auch während der Fahrt. Ist das manuelle Betätigungselement an der Sitzvorderseite angeordnet, so kann es bspw. als Griffmulde- oder -durchbrechung in dem beweglichen Sitzelement ausgebildet sein, mit der dieses Sitzelement aus einer Verankerung angehoben wird, so dass es in Fahrtrichtung verstellt werden kann; anschließend rastet es durch Absenken in der veränderten Position wieder ein und ist dadurch arretiert.

Weitere Merkmale, Eigenschaften, Vorteile und Wirkungen auf der Basis der Erfindung ergeben sich aus der folgenden Beschreibung bevorzugter Ausführungsformen der Erfindung sowie anhand der Zeichnung. Hierbei zeigt:
- Fig. 1: eine erste Ausführungsform der Erfindung in einer perspektivischen Sprengdarstellung;
- Fig. 2: einen schematischen Schnitt durch die Fig. 1 entlang einer mittigen, vertikalen Symmetrieebene; sowie
- Fig. 3: eine der Fig. 2 entsprechende Darstellung einer abgewandelten Ausführungsform der Erfindung.

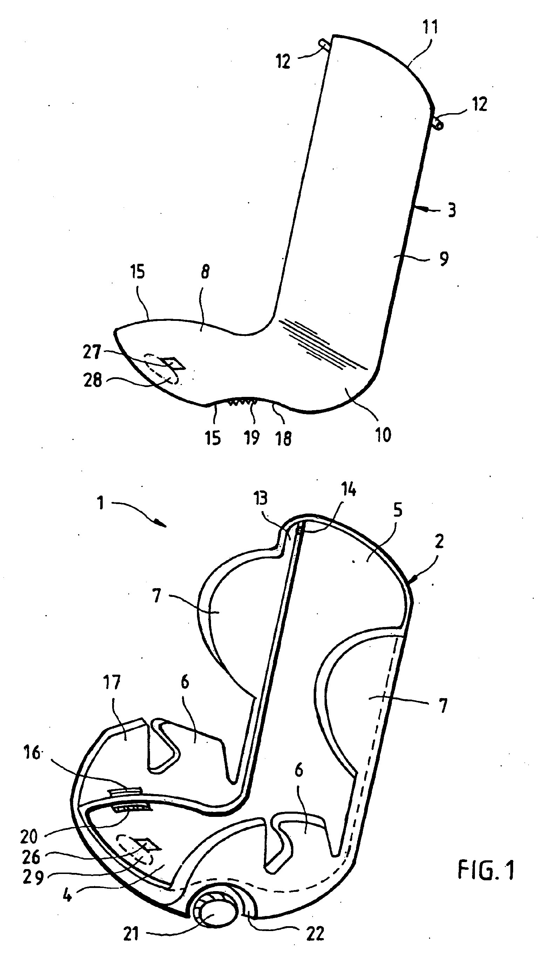

Der Auto-Kindersitz 1 aus Fig. 1 besteht grundsätzlich aus zwei Baueinheiten, nämlich aus einer Sitzschale 2 einerseits und einem darin beweglich aufgenommenen Einsatz 3 andererseits.

Die Sitzschale 2 entspricht hinsichtlich ihrer äußeren Abmessungen etwa einem handelsüblichen Auto-Kindersitz. Sie umfaßt einen Sitzflächen-Bereich 4, einen Rückenlehnen-Bereich 5, zwei Armlehnen 6 und zwei seitliche Kopfstützen 7. Im Gegensatz zu einem handelsüblichen Auto-Kindersitz sind jedoch weder der Sitzflächen-Bereich 4 noch der Rückenlehnen-Bereich 5 für eine direkte Benutzung konzipiert, insbesondere überhaupt nicht gepolstert.

Stattdessen ist der Einsatz 3 vorgesehen, ein flächiges Teil mit einem gewölbten Verlauf etwa entsprechend einer etwa horizontalen Sitzfläche 8 und einer etwa vertikalen Rückenlehne 9. Der Übergangsbereich 10 zwischen den beiden Abschnitten 8, 9 kann sanft geschwungen sein. Der Einsatz 3 ist hinsichtlich seines Umfangs wie auch hinsichtlich seiner Wölbung derart gestaltet, dass er möglichst exakt auf den Sitzflächen- und Rückenlehnen-Bereich 4, 5 der Sitzschale 2 paßt, bspw. kann die Breite etwa dem lichten Abstand zwischen den beiden Armlehnen 6 und/oder zwischen den beiden seitlichen Kopfstützen 7 entsprechen oder minimal kleiner sein als jene.

Im Bereich der Oberkante 11 der Rückenlehne 9 weist der Einsatz zwei seitliche, miteinander fluchtende, zapfenartige Fortsätze 12 auf. An den entsprechenden Stellen des Rückenlehnen-Bereichs 5 sind in je einem nach vorne vorspringenden Ansatz der Rückenlehne 5, bspw. in einer Kopfstütze 7 oder in einer damit etwa fluchtenden Erstreckung 13, Lagerungen 14 zur verdrehbaren Aufnahme je eines Zapfens 12 vorgesehen, insbesondere in Form von Sacklöchern mit quer zur Sitzrichtung verlaufender Einsteckrichtung. Dort wird der Einsatz 3 an der Sitzschale 2 eingehängt.

Andererseits werden die Seitenkanten 15 der Sitzfläche 8 von je einem nach innen vorspringenden Wulst 16 an der Innenseite 17 jeder der beiden Armlehnen 6 übergriffen und dadurch in vertikaler Richtung unverrückbar festgehalten, während sich die Sitzfläche 8 etwa in Sitzrichtung verschieben läßt.

Ferner erstreckt sich an der Unterseite 18 der Sitzfläche 8 des Einsatzes 3, an deren beiden Seitenkanten 15 entlanglaufend, je eine Zahnreihe 19. An den betreffenden Stellen ist in dem Sitzflächen-Bereich 4 der Sitzschale 2 je eine schlitzförmige Vertiefung oder Ausnehmung 20 vorgesehen, in der je ein Zahnrad gelagert ist. Beide Zahnräder sind auf einer gemeinsamen Achse angeordnet, die sich quer zur Sitzrichtung verlaufend innerhalb oder unterhalb des Sitzflächen-Bereichs 4 erstreckt und bspw. im Bereich beider Armlehnen 6 gelagert sein kann. Mindestens an einer Seite der Sitzschale 2 ist diese Achse nach außen verlängert und mit einem Handrad 21 zur manuellen Betätigung versehen. Das Handrad 21 kann bspw. in einer muldenförmigen Vertiefung 22 im Bereich einer Armlehne 6 angeordnet sein. Da die Zahnreihen 19 mit je einem der beiden starr auf der Drehachse befestigten Zahnräder kämmen, wird durch Drehen des Handrades 21 sowie unter Vermittlung der Zahnreihe 19 die Sitzfläche 8 des Einsatzes in Sitzrichtung nach vorne oder entgegen der Sitzrichtung nach hinten bewegt.

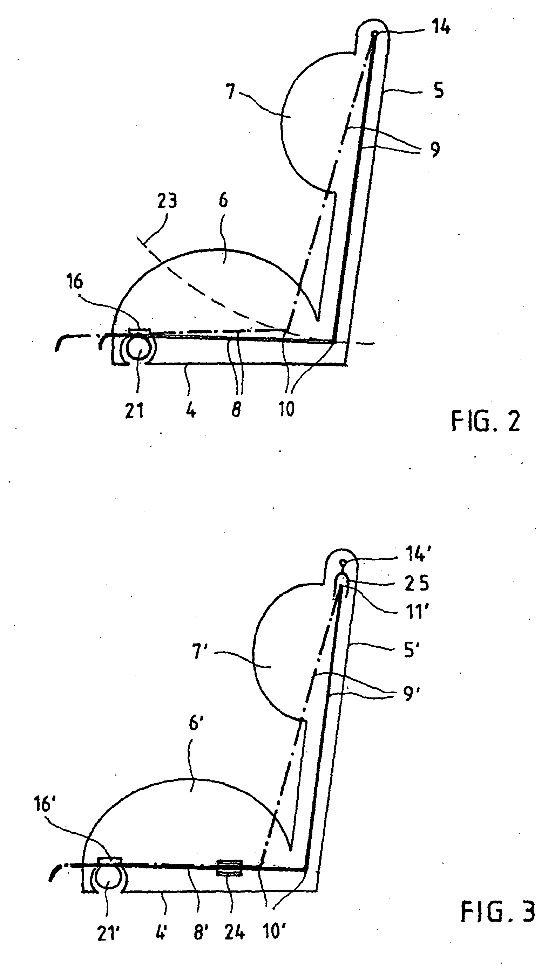

### Die Wirkungsweise dieser Mechanik ist in Fig. 2 dargestellt:

Zunächst befindet sich der Einsatz 3 in der mit dicken Linien markierten, aufrechten Sitzposition, wobei die Rückenlehne 9 etwa mit dem Rückenlehnen-Bereich 5 der Sitzschale 2 fluchtet.

Wird nun das Handrad 21 in Fig. 2 entgegen dem Uhrzeigersinn gedreht, wird die Sitzfläche 8 nach vorne in die strichpunktiert wiedergegebene Position bewegt. Da andererseits die Rückenlehne 9 des Einsatzes 3 eine reine Schwenkbewegung um die Drehachse 14 im Bereich der Lehnen-Oberkante 11 ausführt, bewegt sich auch der Übergangsbereich 10 zwischen Rückenlehne 9 und Sitzfläche 8 auf einer Kreisbahn 23.

Da diese Bewegungskurve nur näherungsweise der nahezu geradlinigen Bewegung der Sitzfläche 8 entspricht, muß sich bei jeder Verstellung der Sitzneigung der Winkel zwischen der Sitzfläche 8 und der Rückenlehne 9 ändern. Dies wird ermöglicht durch eine Biegefähigkeit des flächigen Materials des Einsatzes 3 in dem Übergangsbereich 10. Der Winkel, um den sich die Neigung der Sitzfläche 8 dabei ändert, kann vernachlässigt werden.

Die Wirkungsweise der Mechanik des Sitzes 1' aus Fig. 3 unterscheidet sich demgegenüber geringfügig:

Hier sind für die Sitzfläche 8' zusätzlich zu den Führungen 16' im Bereich des Handrades 21' auch im rückwärtigen Bereich des Sitzes 1' weitere Führungsmittel vorgesehen. Diese können wie die Führungen 16' ebenfalls als nach innen vorspringende Wülste 24 oberhalb des Sitzflächen-Bereichs 4' ausgebildet sein. Diese zusätzlichen Führungen 24 stellen sicher, dass sich die Sitzfläche 8' bei jeder Verstellung innerhalb einer Ebene verschiebt, wobei diese Ebene auch gewölbt sein kann entsprechend der gewölbten Sitzfläche 8 aus Fig. 1. In letzterem Fall entspräche diese Verschiebung tatsächlich wieder einer Drehung etwa um die (gedachte) Mittelachse eines Zylinders, dessen Mantelfläche sich etwa mit der Sitzfläche 8 deckt.

Jedenfalls ist dadurch die Bewegung der Sitzfläche 8' bzw. deren Orientierung im Raum exakt vorgegeben, und diese beeinflußt über den Übergangsbereich auch die Rückenlehne 9', welche in ihrem unteren Bereich nach vorne verlagert werden kann entsprechend der in Fig. 3 strichpunktiert wiedergegebenen Liegeposition. Zum Ausgleich muß im Bereich der Oberkante 11' der Rückenlehne 9' ein zusätzlicher Freiheitsgrad der Bewegung geschaffen werden. Aus diesem Grund ist die Rückenlehne 9' nicht direkt in den Lagerpunkten 14' gelagert, sondern in ihrer Längsrichtung verschiebbar geführt, bspw. entlang von zu der vertikalen Symmetrieebene des Sitzes 1 parallelen Führungsschienen 25.

Beiden Ausführungsformen gemeinsam ist, dass sich der Neigungswinkel der Rückenlehne 9, 9' stärker verändert als der Neigungswinkel der Sitzfläche 8, 8'. Da dies keinen Einfluß auf die Sitzschale 2 hat, kann diese sogar mittels ISOFIX-Technik verankert werden, was den Vorteil hat, dass ein solcher Sitz 1 auch entgegen der Fahrtrichtung betrieben werden kann.

In Fig. 1 ist ferner ein Zentralverstellknopf 26 zu sehen, der sich an der Oberseite des Sitzflächen-Bereichs 4 der Sitzschale 2 befindet, nahe der Sitzvorderkante, und bei dessen Betätigung bspw. die Länge der sitzeigenen Gurte eingestellt werden kann. Dieser Zentralverstellknopf 26 korrespondiert mit einer entsprechenden Ausnehmung 27 in dem beweglichen Einsatz 3, welcher den Zentralverstellknopf 26 insbesondere dann zur Betätigung freigibt, wenn der Einsatz 3 sich in seiner vertikalen Ausgangsposition befindet.

Bei einer modifizierten Ausführungsform befindet sich im Bereich dieser Ausnehmung 27 des Einsatzes 3 eine Durchbrechung in Form eines quer zur Sitzrichtung orientierten Schlitzes 28, der so gestaltet ist, dass er bequem von den Fingern einer Hand durchgriffen werden kann. Ferner kann bei dieser Ausführungsform anstatt der seitlichen Zahnreihen 19 eine einzige, mittige Zahnreihe an der Unterseite 18 der Sitzfläche 8 des Einsatzes 3 vorgesehen sein, die mit einem etwa vertikal nach oben ragenden, bspw. zahnförmigen Rastelement an dem Sitzflächen-Bereich 4 der Sitzschale 2 in Eingriff steht und daher eine Verschiebung des Einsatzes 3 hemmt, bis der Einsatz 3 an dem Griff 28 angehoben wird. Dadurch löst sich der Formschluß zwischen der Zahnreihe des Einsatzes 3 und dem Rastelement der Sitzschale 2, der Einsatz 3 kann in oder entgegen der Sitzrichtung verstellt werden, und durch anschließendes Loslassen des Griffs 28 sinkt die Sitzfläche 8 des Einsatzes 3 wieder herab und rastet dadurch in der neuen Position ein. Eine Vertiefung oder Mulde 29 unterhalb der Griffausnehmung 28 erleichtert das Er- und Umgreifen des Griffrandes 28.

## Patentansprüche

1. Auto-Kindersitz (1;1'), bestehend aus
a) einer Sitzschale (2;2'), umfassend einen unteren Sitzbereich (4;4') mit wenigstens einer unterseitigen Aufstandsfläche zum Aufstellen auf einem Sitz eines Fahrzeugs, einen gegenüber dem Sitzbereich (4;4') empor ragenden Lehnenbereich (5;5') mit wenigstens einer Außenfläche zum Anlehnen an die Rückenlehne des Fahrzeugsitzes, sowie den seitlichen Bewegungsspielraum eines Kindes begrenzende Seitenflächen, bspw. seitliche Armlehnen (6;6'), Schulter- und/oder Kopfstützen (7;7'), wobei zumindest der eine rückwärtige Anlehnfläche aufweisende Teil des Lehnenbereichs (5;5') mit dem eine unterseitige Aufstandsfläche aufweisenden Sitzbereich (4;4') starr verbunden ist, und
b) einem flächigen Sitzelement (3,8,9;3',8',9'), umfassend eine Sitzfläche (8;8') und eine Rückenlehne (9;9'), welche an der dem Kind zugewandten Innenseite der Sitzschale (2;2') angeordnet und dieser gegenüber hinsichtlich ihrer Neigung und/oder Position verstellbar ist/sind und eine Sitzfläche sowie eine Rückenlehne aufweist, sowie
c) einer Einrichtung (19-21;19'-21') an dem Sitz (1;1') mit einer Ankopplung an ein verstellbares, flächiges Sitzelement (3,8,9;3',8',9') einerseits und an die Sitzschale (2;2') andererseits, zur Verstellung der Neigung und/oder Position des flächigen Sitzelementes (3,8,9;3',8',9') und zur Arretierung oder Feststellung desselben in mehreren, unterschiedlichen Neigungen und/oder Positionen,
**dadurch gekennzeichnet, dass**
d) zwischen der Sitzfläche (8;8') und der Rückenlehne (9;9') des flächigen Sitzelements (3;3') eine Relativbewegung möglich ist.

2. Auto-Kindersitz nach Anspruch 1, **dadurch gekennzeichnet, dass** an der Sitzschale (2;2') Einrichtungen zur Fixierung des erfindungsgemäßen Kindersitzes (1;1') auf einem fahrzeugeigenen Sitz vorgesehen sind.

3. Auto-Kindersitz nach Anspruch 2, **dadurch gekennzeichnet, dass** wenigstens ein an der Sitzschale (2;2') angeordnetes Fixierungsmittel als Führungseinrichtung, bspw. Schlitz, und/oder als Klemm- oder Spanneinrichtung für einen fahrzeugeigenen Gurt ausgebildet ist.

4. Auto-Kindersitz nach Anspruch 2 oder 3, **dadurch gekennzeichnet, dass** wenigstens ein Fixierungsmittel an der Sitzschale (2;2') oder an einem daran festlegbaren Adapter laschenartig ausgebildet ist zum Einhängen an einem dafür vorgesehenen Verankerungspunkt an einem Sitz oder an der Karosserie eines Fahrzeugs.

5. Auto-Kindersitz nach einem der vorhergehenden Ansprüche, **dadurch gekennzeichnet, dass** wenigstens ein flächiges Sitzelement (3,8,9;3',8',9') gegenüber der Sitzschale (2;2') derart verstellbar ist, dass bei einer Relatiwerstellung zwischen Sitzelement (3,8,9;3',8',9') und Sitzschale (2;2') letztere keine Relativbewegung gegenüber dem fahrzeugeigenen Sitz ausführt.

6. Auto-Kindersitz nach einem der vorhergehenden Ansprüche, **dadurch gekennzeichnet, dass** wenigstens ein flächiges Sitzelement (3,8,9;3',8',9') gegenüber der Sitzschale (2;2') verschwenkbar ist.

7. Auto-Kindersitz nach einem der vorhergehenden Ansprüche, **dadurch gekennzeichnet, dass** wenigstens ein flächiges Sitzelement (3,8,9;3',8',9') gegenüber der Sitzschale (2;2') verschiebbar ist.

8. Auto-Kindersitz nach einem der vorhergehenden Ansprüche, **dadurch gekennzeichnet, dass** wenigstens ein flächiges Sitzelement (3,8,9;3',8',9') an der Sitzschale (2;2') im Bereich von deren Rückenlehnen-Oberkante gelagert (13,14;13'14') oder geführt (25) ist.

9. Auto-Kindersitz nach einem der vorhergehenden Ansprüche, **dadurch gekennzeichnet, dass** ein flächiges Sitzelement (3,8,9;3',8',9') an dem Sitzbereich (4;4') der Sitzschale (2;2') gelagert oder geführt (16;16') ist, vorzugsweise in dessen vorderem Bereich, insbesondere im Bereich von dessen Vorderkante.

10. Auto-Kindersitz nach einem der vorhergehenden Ansprüche, **dadurch gekennzeichnet, dass** wenigstens ein flächiges Element (3,8,9;3',8',9') aus einem biegsamen Material besteht, bspw. aus einem flächigen Kunststoff oder einem Gewebe oder Geflecht.

11. Auto-Kindersitz nach einem der vorhergehenden Ansprüche, **dadurch gekennzeichnet, dass** wenigstens ein flächiges Element (3,8,9;3',8',9') Luftkammern oder eine sonstige Polsterung aufweist.

12. Auto-Kindersitz nach einem der vorhergehenden Ansprüche, **dadurch gekennzeichnet, dass** im Bereich wenigstens eines flächigen Elements (3,8,9;3',8',9') eine Hinterlüftung vorgesehen ist.

13. Auto-Kindersitz nach einem der vorhergehenden Ansprüche, **dadurch gekennzeichnet, dass** ein verstellbarer Sitzteil (3,8,9;3',8',9') durch unter- bzw. rückseitige Rippen und/oder durch einen zumindest bereichsweise umlaufenden Rahmen verstärkt ist.

14. Auto-Kindersitz nach einem der vorhergehenden Ansprüche, **dadurch gekennzeichnet, dass** an einem verstellbaren Sitzelement (3,8,9;3',8',9') ein dem Kindersitz (1;'1') eigener Gurt für ein Kind geführt und/oder verankert ist, bspw. ein Hosenträgergurt.

15. Auto-Kindersitz nach Anspruch 14, **dadurch gekennzeichnet, dass** der dem Kindersitz (1;1') eigene Gurt wenigstens ein Gurtschloß aufweist, sowie ggf. ein Gurtspannmittel und/oder eine Längenverstellvorrichtung (26) für den Gurt.

16. Auto-Kindersitz nach einem der vorhergehenden Ansprüche, **dadurch gekennzeichnet, dass** die Einrichtung (19-21;19'-21') zur Verstellung der Neigung und/oder Position des flächigen Sitzelementes (3,8,9;3',8',9') ein im Bereich der Sitzvorderseite angeordnetes Betätigungselement aufweist, insbesondere einen Griff (28).

17. Auto-Kindersitz nach einem der vorhergehenden Ansprüche, **dadurch gekennzeichnet, dass** die Einrichtung (19-21;19'-21') zur Arretierung oder Feststellung des flächigen Sitzelementes (3,8,9;3',8',9') formschlüssig ineinandergreifende Elemente aufweist, bspw. in Form von ineinandergreifenden Zähnen (19, 20) an dem flächigen Sitzelement (3) einerseits und an der Sitzschale (2) andererseits.

## Claims

1. A child car seat (1;1'), composed of
a) a seat shell (2;2'), comprising a lower sitting region (4;4') with at least one bottom stand surface to be stood on a seat of a vehicle, a backrest region (5;5') extending upwardly from said sitting region (4;4') and having at least one outer surface to be teased against the backrest of the vehicle seat, and lateral- surfaces, for example lateral armrests (6;6'), shoulder supports and/or head supports (7;7'), for limiting the lateral range of movement of a child, at least that portion of said backrest region (5;5') that comprises a rear leaning surface being rigidly connected to said sitting region (4;4') comprising a bottom stand surface, and
b) a seat element (3,8,9;3',8',9') with a rather two-dimensional geometry, comprising a sitting surface (8; 8') and/or backrest (9;9'), which is/are disposed on the inner side, turned toward the child, of said seat shell (2; 2') and is/are adjustable with respect thereto in terms of their inclination and/or position, as well as
c) a device (19-21;19'-21') on said seat (1;1), with a coupling to an adjustable, rather two-dimensional seat element (3,8,9;3',8',9')- on the one hand and to said seat shell (2;2') on the other hand, for adjusting the inclination and/or position of said rather two-dimensional seat element (3,8,9;3',8',9') and for locking of securing same in a plurality of different inclinations and/or positions,
**characterized in that**
d) a relative movement is possible between said sitting surface (8,8') and said backrest (9;9') of said rather two-dimensional seat element (3;3').

2. The child car seat as in claim 1, **characterized in that** provided on said seat shell (2;2') are devices for fixing the inventive child seat (1;1') to a vehicle-inherent seat.

3. The child car seat as in claim 2, **characterized in that** at least one fixing means disposed on said seat shell (2;2') is configured as a guiding device, for example a slit, and/or as a clamping or tensioning device for a vehicle-inherent belt.

4. The child car seat as in claim 2 or 3, **characterized in that** at least one fixing means on said seat shell (2;2') or on an adapter fastenable thereto is configured as lab-like for suspension from an anchor point provided for this purpose on a seat or on the body of a vehicle.

5. The child car seat as in one of the preceding claims, **characterized in that** at least one rather two-dimensional seat element (3,8,9;3',8',9') is adjustable with respect to said seat shell (2;2') such that upon a relative adjustment between said seat element (3,8,9;3',8',9') and said seat shell (2;2'), the latter executes no relative movement with respect to the vehicle-inherent seat.

6. The child car seat as in one of the preceding claims, **characterized in that** at least one rather two-dimensional seat element (3,8,9;3',8',9') is pivotable with respect to said seat shell (2;2').

7. The child car -seat as in one--of the preceding claims, **characterized in that** at least one rather two-dimensional seat element (3,8,9;3',8',9') is displaceable with respect to said seat shell (2;2').

8. The child car seat as- in one of the preceding claims, **characterized in that** at least one rather two-dimensional seat element (3,8,9;3',8',9') is bearing-mounted (13, 14; 13', 14') or guided (25) on said seat shell (2;2') in the region of the top edge of the backrest thereof.

9. The child car seat as in one of the preceding claims, **characterized in that** a rather two-dimensional seat element (3,8,9;3',8',9') is bearing-mounted or guided (16;16') on said sitting region (4;4') of said seat shell (2;2'), preferably in the front region thereof, particularly in the region of its-front edge.

10. The child car seat as in one of the preceding claims, **characterized in that** at least one rather two-dimensional element (3,8,9;3',8',9') is made of a flexible material, for example a planar plastic or a fabric or braid.

11. The child car seat as in one of the preceding claims, **characterized in that** at least one rather two-dimensiona! element (3,8,9;3',8',9') comprises air chambers or another type of cushioning.

12. The child car seat as in one of the preceding claims, **characterized in that** back-ventilation is provided in the region of at least one- rather two dimensional element (3,8,9;3',8',9').

13. The child car seat as in one of the preceding claims, **characterized in that** an adjustable seat portion (3,8,9;3',8',9') is reinforced with ribs on- the underside or back and/or by a frame that passes around it at least regionally.

14. The child car seat as in one of the preceding claims, **characterized in that** a belt intended for a child and inherent in said child seat (1;1'), for example a suspender belt, is guided and/or anchored on an adjustable seat element (3,8,9;3',8',9').

15. The child car seat as in claim 14, **characterized in that** said belt inherent in said child seat (1;1') comprises at least one belt buckle and optionally a belt tensioning means and/or a length adjusting device (26) for said belt.

16. The child car seat as in one of the preceding claims, **characterized in that** said device (19-21;19'-21') for adjusting the inclination and/or position of said rather two-dimensional seat element (3,8,9;3',8',9') comprises an operating element, particularly a grip (28), disposed in the region of the front of the seat.

17. The child car seat as in one of the preceding claims, **characterized in that** said device (19-21;19'-21') for locking or securing said rather two-dimensional seat element (3,8,9;3',8',9') comprises form-lockingly meshing elements, for example in the form of meshing teeth (19,20) disposed on said planar seat element (3) and on said seat shell (2).

## Revendications

1. Siège auto pour enfants (1 ; 1') comprenant
a) une coque (2 ; 2'), comportant une zone d'assise inférieure (4 ; 4') avec au moins une surface support inférieure pour placer sur un siège d'un véhicule, une zone de dossier (5 ; 5') dépassant par rapport à la zone d'assise (4 ; 4') avec au moins une surface extérieure pouvant s'appuyer contre le dossier du siège du véhicule, ainsi que des surfaces latérales limitant l'espace de mouvement latéral d'un enfant, par ex. des accoudoirs latéraux (6 ; 6'), des renforts épaules et /ou des appuie-têtes (7 ; 7'), où au moins la partie présentant un surface d'appui arrière de la zone du dossier (5 ; -5') est reliée de manière rigide à la zone d'assise (4 ; 4') présentant une surface support inférieure, et
b) un élément de siège plan (3, 8, 9 ; 3',8', 9') comprenant une assise (8 ; 8') et un dossier (9 ; 9') lequel est placé sur le côté intérieur tourné vers l'enfant de la coque (2 ; 2') ; cette dernière étant réglable par rapport à son inclinaison et/ou sa position et présente une assise ainsi qu'un dossier, et
c) un dispositif (19-21 ; 19'-21') sur le siège (1 ; 1') avec un système de couplage à un élément de siège plan réglable (3, 8, 9 ; 3', 8', 9') d'une part,- et à la coque (2- ; 2') d'autre part, pour le réglage de l'inclinaison et/ou de la position de l'élément de siège plan (3, 8, 9 ; 3', 8', 9') et pour le blocage ou la fixation de ce dernier en plusieurs inclinaisons et/ou positions différentes,
**caractérisé en ce que**
d) un mouvement relatif est possible entre l'assise (8 ; 8') et le dossier (9 ; 9') de l'élément- de siège plan (3 ; 3').

2. Siège auto pour enfants selon la revendication 1, **caractérisé en ce que**, au niveau de la coque (2 ; 2'), des dispositifs de fixation du siège d'enfant (1 ; 1') selon l'invention sont prévus sur le siège propre au véhicule.

3. Siège auto pour enfants selon la revendication 2, **caractérisé en ce qu'**au moins un moyen de fixation aménagé sur la coque (2 ; 2') est conçu- comme dispositif de glissière, par ex. rainure, et/ou comme dispositif de serrage ou de tension pour une ceinture propre au véhicule.

4. Siège auto pour enfants selon la revendication 2 ou 3, **caractérisé en ce qu'**au moins un moyen de fixation sur la coque (2 ; 2') ou sur un adaptateur pouvant y être fixé est réalisé sous forme de languette pour l'accrochage à un point d'ancrage prévu à cet effet à un siège ou à la carrosserie d'un véhicule.

5. Siège auto pour enfants selon l'une des revendications précédentes, **caractérisé en ce qu'**au moins un élément de siège plan (3, 8, 9 ; 3', 8',9') est réglable par rapport à la coque (2 ; 2') de façon telle que Lors d'un réglage relatif entre l'élément de siège (3, 8, 9 ; 3', 8', 9') et la coque (2 ; 2') cette dernière n'effectue pas de mouvement relatif par rapport au siège propre au véhicule.

6. Siège auto pour enfants selon l'une des revendications précédentes, **caractérisé en ce qu'**au moins un élément de siège plan (3, 8, 9 ; 3', 8', 9') peut pivoter par rapport à la coque (2 ; 2').

7. Siège auto pour enfants selon l'une des revendications précédentes, **caractérisé en ce qu'**au moins un élément de siège plan (3, 8, 9 ; 3', 8', 9') peut être déplacé par rapport à la- coque (2 ; 2').

8. Siège auto pour enfants selon l'une des revendications précédentes, **caractérisé en ce qu'**au moins un élément de siège plan (3, 8, 9 ; 3', 8', 9') de la coque (2 ; 2') est logé ou guidé (25) dans la zone du bord supérieur de son dossier (13, 14; 13', 14').

9. Siège auto pour enfants selon l'une des revendications précédentes, **caractérisé en ce qu'**au moins un élément de siège plan (3, 8, 9 ; 3', 8', 9') est logé ou guidé (16 ; 16') au niveau de la zone d'assise (4 ; 4') de la coque (2 ; 2'), de préférence dans sa zone frontale, en particulier dans la zone de son bord avant.

10. Siège auto pour enfants selon l'une des revendications précédentes, **caractérisé en ce qu'**au moins un élément plan (3, 8, 9 ; 3', 8', 9') consiste en une matière flexible, par ex. en matière plastique plane ou en tissu ou tresse.

11. Siège auto pour enfants selon l'une des revendication précédentes, **caractérisé en ce qu'**au moins un élément plan (3, 8, 9 ; 3', 8', 9') présente des poches d'air ou un autre rembourrage.

12. Siège auto pour enfants selon l'une des revendications précédentes, **caractérisé en ce qu'**une aération arrière est prévue dans la zone d'au moins un élément plan (3, 8, 9 ; 3', 8', 9').

13. Siège auto pour enfants selon l'une des revendications précédentes, **caractérisé en ce qu'**un élément de siège réglable (3, 8, 9 ; 3', 8', 9') est renforcé par des nervures inférieures ou arrière et/ou par un cadre l'entourant tout au moins- partiellement.

14. Siège auto pour enfants selon l'une des revendications précédentes, **caractérisé en ce que** sur un élément de siège réglable (3, 8, 9 ; 3', 8', 9') est passée et/ou ancrée une ceinture pour un enfant propre au siège d'enfant (1 ; 1'), par ex. un harnais.

15. Siège auto pour enfants selon la revendication 14, **caractérisé en ce que** la ceinture propre au siège d'enfant (1 ; 1') présente au moins un dispositif de fermeture de la ceinture ainsi que, le cas échéant, un dispositif de serrage de la ceinture et/ou un dispositif de réglage en longueur (26) pour la ceinture.

16. Siège auto pour enfants selon l'une des revendications précédentes, **caractérisé en ce que** le dispositif (19-21 ; 19'-21') présente pour le réglage de l'inclinaison et/ou de la position de l'élément de siège plan (3, 8, 9 ; 3', 8', 9') un élément de commande placé dans la zone de la partie frontale du siège, en particulier une poignée (28).

17. Siège auto pour enfants selon l'une des revendications précédents, **caractérisé en ce que** le dispositif (19-21 ; 19'-21') présente pour le blocage ou la fixation de l'élément de siège plan (3, 8, 9 ; 3', 8', 9') des éléments s'engrenant solidairement, par ex. sous forme de dents (19, 20) s'engrenant, d'une part, au niveau de L'élément de siège plan (3) et, d'autre part, au niveau de la coque (2).
